# EUROPEAN PATENT SPECIFICATION

(11) **EP 2 195 325 B1**
(45) Date of publication and mention of the grant of the patent: **10.08.2011**
(21) Application number: 08802794.1
(22) Date of filing: 06.10.2008
(51) Int. Cl.: C07F 7/18, C07F 7/08, C03C 25/26, C03C 25/28

(54) **ACTIVATED SILANE**
AKTIVIERTES SILAN
SILANE ACTIVÉ

(30) Priority: 04.10.2007 DE 102007047373
(43) Date of publication of application: 16.06.2010
(73) Proprietor: SAINT-GOBAIN ISOVER, 92400 Courbevoie (FR)
(72) Inventor: HÜNIG, Hagen, 69221 Dossenheim (DE)
(74) Representative: Winter, Brandl, Fürniss, Hübner, Röss, Kaiser, Polte - Partnerschaft
(86) International application number: PCT/EP2008/008422
(87) International publication number: WO 2009/043599

(56) References cited:
- EP-A- 0 297 602
- DE-A1-102005 056 791

## Description

The present invention relates to a process for preparing an activated silane according to claim 1.

In the manufacture of bound mineral wool products from a molten glass or mineral material, it has for a long time been accepted practice to apply, following fiberization of the molten material, a binder on the basis of phenol-formaldehyde resin onto the fibers while still hot. This is preferably done inside the chute following fiberization, for example in accordance with the blast drawing method according to DE 35 09 426 A1.

Here a phenol-formaldehyde resin, being the best-known binder in the prior art, is preferably sprayed on the fibers in the form of an aqueous solution or dispersion, with the phenol-formaldehyde resin then beginning to polymerize on the fiber surface owing to the still relatively high temperatures of the fibers and interconnecting the individual fibers by the polymerization process, in particular at crossing points of fibers, because the fibers overlying each other on a crossing point are embedded there, more or less, by solidified droplets of resin, whereby the mobility of the individual fibers among each other is initially impeded and later on prevented substantially entirely during curing by means of hot gases, for example in a tunnel oven.

Such a binder is described, e.g., in US 3,231,349. For reasons of environmental protection and for reasons of workplace safety, attempts are in the meantime increasingly being undertaken to replace the classical phenolic resin binders, because of their formaldehyde content and their formaldehyde emission, with alternative, formaldehyde-free binders.

Further, EP 0297602 A2 relates to a sizing agent for the treatment of glass fibers which are incorporated in thermoplastic materials for reinforcement as well as a process for manufacturing a sizing agent. The sizing comprises a reactive silane in the form of a Schiffs base.

Thus, e.g., DE 10 2005 056 791 A1 for the present application describes a curable, formaldehyde-free, aqueous binder composition for glass and mineral wool fibers on the basis of polymer polyacids, an amine, and an activated silane.

As for an activated silane, it is disclosed in DE 10 2005 056 791 A1 in the framework of a binder composition including further components, that:
- it is obtainable by reacting a silane, selected from the group comprising: mono-, di-, and trialkoxysilanes including a C₁ to C₈ alkoxy group, wherein the alkoxysilane carries at least one C₂ to C₁₀ aminoalkyl group or a C₂ to C₁₀ N-aminoalkyl group; 3(2-aminoethylamino)propyl-trimethoxysilane; (MeO)₃-Si-(CH₂)₃-NH-(CH₂)₃-Si-(OMe)₃; 3-aminopropylsilanetriol; aminosilane with ethoxylated nonyl-phenolate; phenyl-CH₂-NH-(CH₂)₃-NH-(CH₂)₃-Si-(OMe)₃*HCl; as well as mixtures thereof;
with
an enolizable ketone including at least one carbonyl group or a ketone including at least one OH group, wherein the ketone contains 3 to 12 C atoms.

Starting out from this prior art, it accordingly was an object of the present invention to furnish further additives for binder compositions, in particular formaldehyde-free ones for mineral fibers, having after curing properties comparable with those of a phenol-formaldehyde binder without, however, having the emission problems of the latter, in particular in the manufacture of mineral wool products.

This object is achieved throug a method for producing an activated silane, characterized by reacting a silane, selected from the group comprising: mono-, di-, and trialkoxysilanes including a C₁ to C₈ alkoxy group, wherein the alkoxysilane carries at least one C₂ to C₁₀ aminoalkyl group or a C₂ to C₁₀ N-aminoalkyl group; 3(2-aminoethylamino)propyl-trimethoxysilane; (MeO)₃-Si-(CH₂)₃-NH-(CH₂)₃-Si-(OMe)₃; 3-aminopropylsilanetriol; aminosilane with ethoxylated nonyl-phenolate; phenyl-CH₂-NH-(CH₂)₃-NH-(CH₂)₃-Si-(OMe)₃*HCl; as well as mixtures thereof
with
a ketone according to Formula (1) including at least one carbonyl group which forms an acetal or semiacetal with a C₁ to C₁₂ alkyl or cycloalkyl alcohol, or which forms a geminal diol with water; or
with
an open-chain or cyclic acetal or semiacetal or geminal diol of a ketone according to Formula (1): 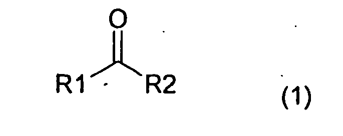 wherein R1 and R2, being identical or different, are independently selected from the group comprising: H; C₁ to C₉ alkyl; C₂ to C₉ alkenyl including 1 - 4 double bonds, C₁ to C₉ hydroxyalkyl; aryl including 5 or 6 C atoms in the cycle or heteroaryl including 1 - 4 hetero atoms and 4 - 8 C atoms in the cycle, cycloalkyl including 5 - 10 C atoms, heterocycloalkyl including 1 - 4 hetero atoms and 4 - 8 C atoms in the cycle, carbonyl, carboxyl, C₁ to C₉ n-alkylcarbonyl having a position of the carbonyl function of 1 - 9, C₁ to C₉ alkoxycarbonyl, wherein the alkyl residue in particular is methyl, ethyl, propyl, or butyl;
and wherein the acetal, semiacetal or geminal diol corresponds to the following general Formula (2): 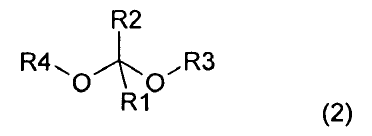 wherein R3 and R4, being identical or different, independently is C₁ to C₁₂ alkyl or C₁ to C₁₂ cycloalkyl or H, and R1 and R2 have the same meaning as in Formula (1)
or
wherein R3 is an n-alkyl residue including 2 - 5 C atoms, and R1 and R2 have the same meaning as in Formula (1) or R1 and R2 is equal to H and R3 is equal to 2-oxypropyl, 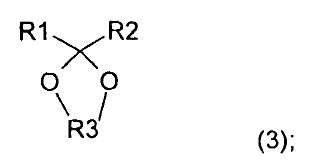 or
the silane is reacted with mixtures of the named acetals and geminal diols.

In terms of process technology, the object is achieved through the characterizing features of claim 1.

The activated silane prepared according to the present invention is, for example, suited as a component of a binder composition for mineral fibers according to DE 10 2005 056 791 A1, containing:
➢ an aqueous dispersion of at least one polymer polycarboxylic acid;
➢ at least one amino compound of the general Formula (1) 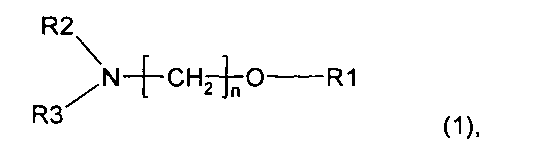 wherein R1, R2 and R3, independently of each other, are equal to or different from H, and R1 corresponds to the general Formula (2): 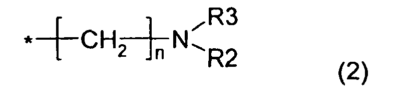 with a value for n of 2 - 10 and R2 and R3, independently of each other, being equal to or different from H or corresponding to the general Formula (3): 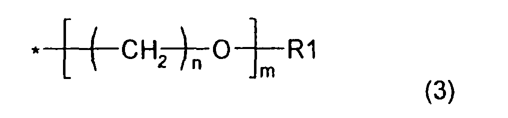
➢ wherein m may assume a value of 1 - 50, and the molecular mass of the amino compound does not exceed about 20,000 g/mol;
at least one activated silane according to the present invention.

A preferred silane for producing the activatable silane according to the method of the present invention is 3-aminopropyltriethoxysilane. It is commercially available at low cost.

As carbonyl compounds for the manufacture of the activated silane, dihydroxyacetone or acetylacetone are preferably employed due to their easy availability, however the activated silane may also be produced with an enolizable ketone including at least one carbonyl group, or a ketone including at least one OH group, wherein the ketone contains 3 to 12 C atoms, or an alkyl-, aryl- or heteroaryl-substituted aldyehde, wherein acetalizitation in this case brings about an improved stability against oxygen.

The activated silane prepared according to the method of the invention is thus on the one hand suited as an additive for formaldehyde-free binders, but on the other hand also as an additive for conventional phenol-formaldehyde resin binders. For one thing, with the additive of the invention it is possible to manufacture absolutely formaldehyde-free mineral wool products, and on the other hand the binders and thus, of course, also the mineral wool products are water-resistant following curing.

For the manufacture of formaldehyde-free bound mineral wool with the binder component of the invention, the binder is applied onto the fibers while they are still hot following fiberization of a molten mineral material, and the mineral wool product with the applied binder is subjected to a curing process. Here the binder is applied on the fibers in particular by spraying the fibers attenuated from the molten mineral material inside the chute.

A bound mineral wool product thus manufactured satisfies any mechanical and chemical demands just like a mineral wool product bound by using classical phenol-formaldehyde resin.

Without being bound thereto, the activation of the silane with the acetal compounds appears to possibly unfold in accordance with the following reaction scheme, demonstrated on the ketal of acetylacetone:

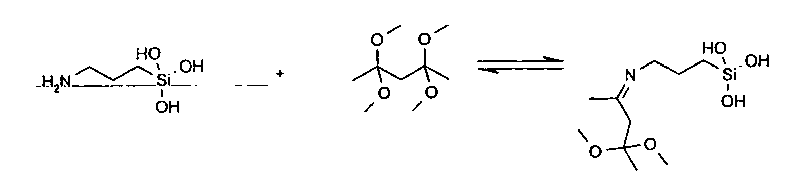

As a result of the activation of the silane - in the above reaction scheme by way of the example of the γ-aminopropylsilanetriol having resulted from hydrolysis of 3-aminopropyltriethoxysilane - by reaction with the shown, exemplary acetals, there is formed on the activated molecule a "resin side" which is formed by the N part, in addition to a glass side formed by the Si part.

In the prior art, the amino group of the silane was reacted with formaldehyde into a Schiff's base which in turn reacted with the phenol-formaldehyde resin.

Thus a formaldehyde content of the binder as required in the prior art is not necessary any more because the activated silane carries an N-containing molecule portion which is capable of coupling to the binder resin - e.g., to the reaction product of the polyacrylate with the amine compound, particularly alkanolamine, but also to the ring of activated aromatic systems by performing a C- alkylation - which is thus bound via the silane linker to the glass surface of the hot fiber. These hydrolytic linkings take place rapidly on the fiber while it is still hot.

Further advantages and features of the present invention will become evident from the description of practical examples as well as from the drawings, wherein:
- Fig. 1:: is a schematic view of silane coupled to a glass fiber via the Si portion of an activated silane; and
- Fig. 2:: is a schematic view of a resin bound to a glass surface on a fiber via an activated silane.

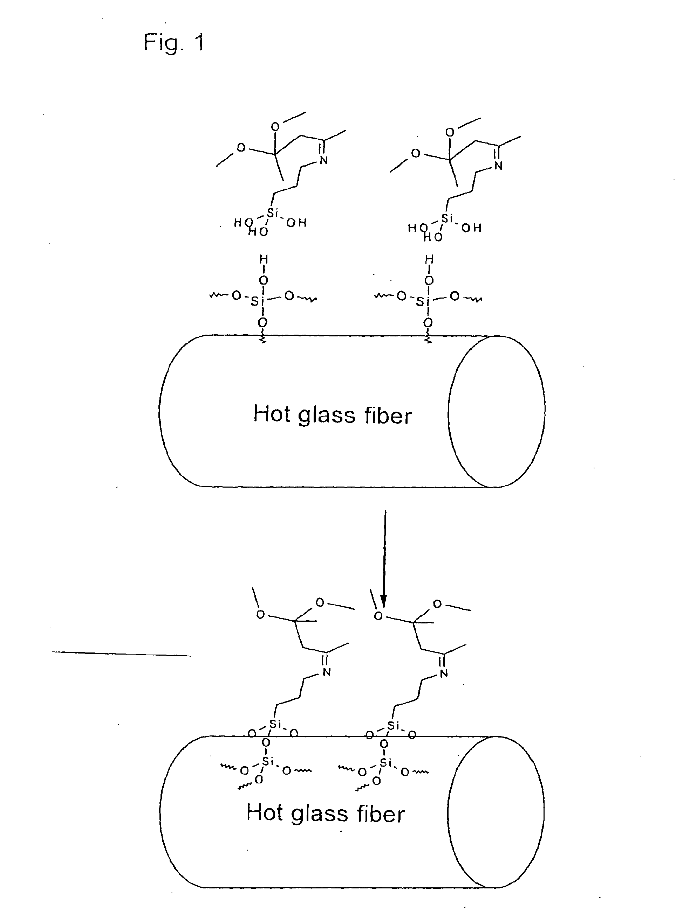

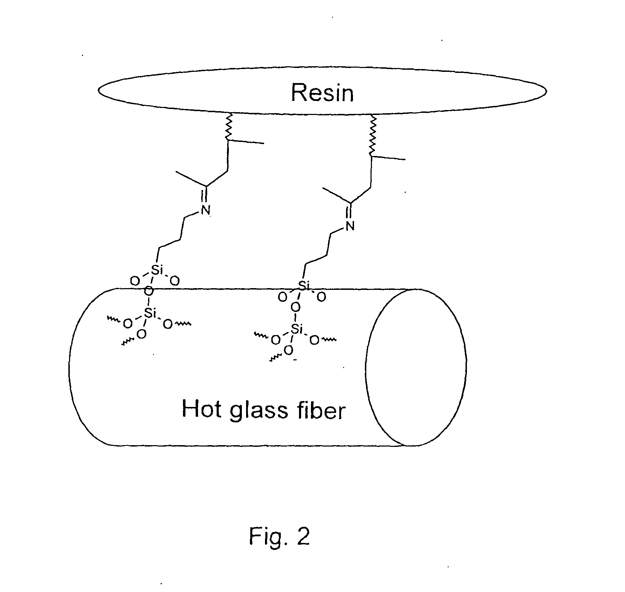

The overall context by the example of the above mentioned binder composition with activated silane as a component in connection with the manufacture of mineral or glass fibers is once again visualized in Fig. 1 and Fig. 2.

Here the represented molecular arrangement should merely be understood in a schematic manner. Crosslinking reactions may, of course, for example still purposely take place inside the resin with crosslinking agents and with the alkanolamine, exemplarily polyacrylate. As a matter of fact it is also possible for unintended secondary reactions to occur, as is true with any polymerization. The contents of Figs. 1 and 2 may therefore merely be considered to be a model concept which is, however, helpful for an understanding of the invention.

### Practical examples

The resins equipped with activated silane were tested in the laboratory and on the finished product in accordance with various testing methods. The results were compared with those of binder systems on the basis of the same base resins with silane in the absence of activation. Initially, the representation of the corresponding acetals from the corresponding alcohol and the respective carbonyl compound shall be described.

General operating prescription: 0.1 mole each of the corresponding carbonyl compound is boiled with 250 ml of the respective alcohol and 0.1 g of toluenesulfonic acid at the water separator until water does not pass over any more. Methylenechloride serves as an entraining agent. After completed reaction, entraining agent and excess alcohol are removed under vaccum. The residue is received with methylenechloride and shaken out with little-saturated sodium carbonate solution so as to remove the toluenesulfonic acid. The solution thus washed is dried with sodium sulphate. Then the solvent is removed, and the residue is dried. Purity of the product may simply be examined by IR spectroscopy as completeness of the reaction is identifiable by the absence of the respective carbonyl band at ~1700 cm⁻¹.

**Table 1 Representation of the acetals**

| Carbonyl compound | Acetal | Mass 0.1 mole batch in g | Alcohol | Yield g / % |
|---|---|---|---|---|
| β-Resorcylaldehyde | 1 | 13.8 | Methanol | 8.47 / 46 |
| Thiophene-2-carbaldehyde | 2 | 11.2 | Methanol | 8.54 / 54 |
| Acetylacetone | 3 | 10.0 | Ethanol | 22.1 / 89 |

The respective acetals were used with two different binders for activation of the silane.

Binder 1: What was used was a non-neutralized phenolic resin having a solids content of 46%, wherein the residual content of free formaldehyde was trapped by an activated aromatic substance. The aim was a binder having a solids content of 40%. Composition without acetal: 100 g of resin, 1.1 g of resorcinol, 0.5 g of 3-aminopropyltriethoxysilane, 17.8 g of water

Binder 1 without activation of the silane at the sime time served as Reference 1. Binder 2: What was used was a polyacrylic acid having a solids content of 50%, which was neutralized to a pH of 7.0 with ethanolamine. The aim was a binder having a solids content of 40%.

Composition without acetal: 100 g of resin, 0.5 g of 3-aminopropyltriethoxysilane, 83.1 g of water

Binder 2 without activation of the silane at the sime time served as Reference 2.

Activation of the silane generally took place in the following manner. The silane was charged in the respective dilution water and adjusted to a pH of 6.0 with the aid of hydroxyethanoic acid. Then the respective quantity of the acetal was added, and stirring was performed until an intense yellow coloration was observed. The solution of the silane was added to the respective binder batch.

**Table 2 Used amounts of the respective activator**

| Binder | Acetal | Mass in mg | Variant |
|---|---|---|---|
| 1 | 1 | 383 | 1.1 |
| 1 | 2 | 233 | 1.2 |
| 1 | 3 | 516 | 1.3 |
| 2 | 1 | 424 | 2.1 |
| 2 | 2 | 364 | 2.2 |
| 2 | 3 | 572 | 2.3 |

### Determination of glass - resin adhesion

General operating method:

Circular glass pieces having a diameter of 7 cm, or a surface area of 38.5 cm², respectively, were used. The surface area was determined by counting with the aid of a grid template. The values were rounded.

On a circular piece of fire-polished glass having a composition in accordance with EP 1 522 532 A1, 5 drops of a 20% binder solution are distributed homogeneously. The film is initially dried at 50°C in order to avoid inhomogeneities, and subsequently cured during 2 h at 150°C. The coated pieces are stored in water during 24 h at 70°C. Then the surface area proportion of the stripped resin is determined. A binder with a technically meaningful use should still adhere by at least 75% of the surface area to the glass after the test. The results are summarized in Table 3.

**Table 3: Proportion of stripped resin following storage at 70°C in water for 24 hours (indications rounded to integers)**

| Binder variant | Area absolute in cm² | Percentage |
|---|---|---|
| 1.0 Reference | 36 | > 95 |
| 1.1 | 2 | 5 |
| 1.2 | 3 | 7 |
| 1.3 | 3 | 9 |
| 2.0 Reference | 37 | > 95 |
| 2.1 | 12 | 30 |
| 2.2 | 17 | 45 |
| 2.3 | 3 | 8 |

The results in Table 3 furnish positive evidence that an activation of the silane is necessary for a sufficient glass/resin adhesion, and that the imine should have a functionality that is well suited to the resin. This explains the comparatively poorer results in the case of activation of the polyacrylic acid with aromatic systems (2.1; 2.2).

With the respective binder variants, sample insulating materials having a nominal loss on ignition of 3.7% and a target bulk density of 50 kg/m³ at a thickness of 50 mm were prepared. The sample insulating materials were cut to sample pieces of 200x200 mm and subjected to the Nord test (7d, 70°C and 95% relative atmospheric humidity). The criterion used as a measure for the usefulness of the binder system was the thickness change after Nord test. In comparison, a board of this bulk density, following the complete removal of the binder by annealing, had a thickness of about 170 mm. In Table 4 the results of this testing method are shown.

**Table 4 Thickness of sample insulating materials of one bulk density before and after Nord test (average values, rounded)**

| Binder variant | Thickness in mm before Nord test | Thickness in mm after Nord test |
|---|---|---|
| 1.0 Reference | 60 | 90 |
| 1.1 | 55 | 60 |
| 1.2 | 60 | 70 |
| 1.3 | 50 | 60 |
| 2.0 Reference | 65 | 130 |
| 2.1 | 60 | 100 |
| 2.2 | 50 | 90 |
| 2.3 | 50 | 65 |

The results in Table 4 also furnish evidence for the positive effect of activation of the silane in contrast with the reference values. Likewise, the comparatively poorer efficiency of the activation with aromatic systems in the case of polyacrylic acid is hereby confirmed.

## Claims

1. A method for producing an activated silane **characterized in that**
a silane, selected from the group comprising: mono-, di-, and trialkoxysilanes including a C₁ to C₈ alkoxy group, wherein the alkoxysilane carries at least one C₂ to C₁₀ aminoalkyl group or a C₂ to C₁₀ N-aminoalkyl group; 3(2-aminoethylamino)propyl-trimethoxysilane; (MeO)₃-Si-(CH₂)₃-NH-(CH₂)₃-Si-(OMe)₃; 3-aminopropylsilanetriol; aminosilane with ethoxylated nonyl-phenolate; phenyl-CH₂-NH-(CH₂)₃-NH-(CH₂)₃-Si-(OMe)₃*HCl; as well as mixtures thereof
is reacted with
an open-chain or cyclic acetal or semiacetal or geminal diol of a ketone according to Formula (1): 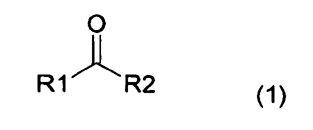
including at least one carbonyl group which forms an acetal or semiacetal with a C₁ to C₁₂ alkyl or cycloalkyl alcohol, or which forms a geminal diol with water;
wherein R1 and R2, being identical or different, are independently selected from the group comprising: H; C₁ to C₉ alkyl; C₂ to C₉ alkenyl including 1 - 4 double bonds, C₁ to C₉ hydroxyalkyl; aryl including 5 or 6 C atoms in the cycle or heteroaryl including 1 - 4 hetero atoms and 4-8 C atoms in the cycle, cycloalkyl including 5 - 10 C atoms, heterocycloalkyl including 1 - 4 hetero atoms and 4 - 8 C atoms in the cycle, carbonyl, carboxyl, C₁ to C₉ n-alkylcarbonyl having a position of the carbonyl function of 1- 9, C₁ to C₉ alkoxycarbonyl, wherein the alkyl residue in particular is methyl, ethyl, propyl, or butyl;
and wherein the acetal, semiacetal or geminal diol corresponds to the following general Formula (2): 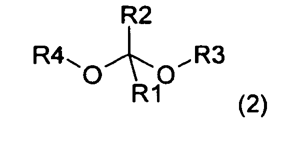
wherein R3 and R4, being identical or different, independently is C₁ to C₁₂ alkyl or C₁ to C₁₂ cycloalkyl or H, and R1 and R2 have the same meaning as in Formula (1)
or
wherein R3 is an n-alkyl residue including 2 - 5 C atoms, and R1 and R2 have the same meaning as in Formula (1) or R1 and R2 is equal to H and R3 is equal to 2-oxypropyl, 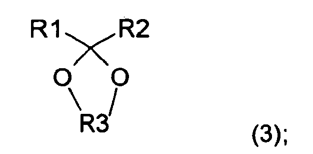 or
the silane is reacted with mixtures of the named acetals and geminal diols.

2. The method according to claim 1, **characterized in that** the silane is 3-aminopropyltriethoxysilane.

3. The method according to claim 1 or 2, **characterized in that** several carbonyl groups in the ketone according to Formula (1) are acetalized.

4. The method according to claims 1 to 3, **characterized in that** the ketone is selected from the group comprising: dihydroxyacetone; monohydroxyacetone; acetylacetone.

5. The method according to claims 1 to 4, **characterized by** charging, preferably in a tank equipped with a mechanical stirrer, water, preferably dilution water, for starting a binder composition;
adding the corresponding quantity of the carbonyl compound and corresponding alcohol or the acetal and/or geminal diol, and stirring until complete dissolution, wherein for compounds poorly soluble in water, careful heating is optionally performed, or a dispersing aid is added while stirring vigorously;
the silane is added to this solution; and
stirring is continued until a distinct change of color of the solution.

## Patentansprüche

1. Verfahren zum Herstellen eines aktivierten Silans,
**dadurch gekennzeichnet, dass**
ein Silan ausgewählt aus der Gruppe umfassend: Mono-, Di- und Trialkoxysilane mit einer C₁ bis C₈-Alkoxygruppe, wobei das Alkoxysilan wenigstens eine C₂ bis C₁₀-Aminoalkylgruppe oder eine C₂ bis C₁₀-N-Aminoalkylgruppe trägt; 3(2-Aminoethylamino)propyl-trimethoxysilan; (MeO)₃-Si-(CH₂)₃-NH-(CH₂)₃-Si-(OMe)₃; 3-Aminopropylsilantriol; Aminosilan mit ethoxyliertem Nonylphenolat; Phenyl-CH₂-NH-(CH₂)₃-NH-(CH₂)₃-Si-(OMe)₃*HCl; sowie deren Mischungen,
umgesetzt wird
mit einem offenkettigen oder zyklischen Acetal oder Halbacetal oder geminalen Diol eines Ketons gemäß Formel (1): 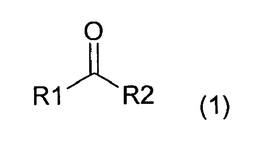
umfassend wenigstens eine Carbonylgruppe, die ein Acetal oder Halbacetal mit einem C₁ bis C₁₂-Alkyl oder Cycloalkylalkohol bildet, oder die ein geminales Diol mit Wasser bildet;
wobei R1 und R2 gleich oder ungleich, unabhängig voneinander ausgewählt sind aus der Gruppe bestehend aus: H; C₁ bis C₉-Alkyl; C₂ bis C₉-Alkenyl mit 1-4 Doppelbindungen, C₁ bis C₉-Hydroxyalkyl; Aryl mit 5 oder 6 C-Atomen im Cyclus oder Heteroaryl mit 1-4 Heteroatomen und 4-8 C-Atomen im Cyclus, Cycloalkyl mit 5-10 C-Atomen, Heterocycloalkyl mit 1-4 Heteroatomen und 4-8 C-Atomen im Cyclus, Carbonyl, Carboxyl, C₁-C₉-n-Alkylcarbonyl mit einer Position der Carbonylfunktion von 1-9, C₁-C₉-Alkoxycarbonly worin der Alkylrest insbesondere Methyl, Ethyl, Propyl oder Butyl ist
und wobei das Acetal, Halbacetal oder geminale Diol der folgenden allgemeinen Formel (2) entspricht: 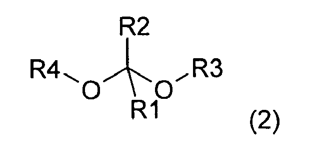
worin R3 und R4 gleich oder ungleich, unabhängig voneinander C₁ bis C₁₂-Alkyl- oder C₁ bis C₁₂-Cycloalkyl oder H ist, und R1 und R2 dieselbe Bedeutung wie in Formel (1) aufweisen
oder
in dem R3 ein n-Alkylrest mit 2-5 C-Atomen und R1 und R2 dieselbe Bedeutung wie in Formel (1) aufweisen oder R1 und R2 gleich H und R3 gleich 2-Oxypropyl ist, 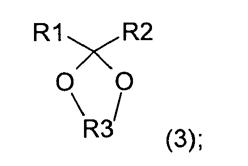
oder
das Silan mit Mischungen aus den genannten Acetalen und geminalen Diolen umgesetzt wird.

2. Verfahren nach Anspruch 1, **dadurch gekennzeichnet, dass** das Silan Aminopropyltriethoxysilan ist.

3. Verfahren nach Anspruch 1 oder 2 **dadurch gekennzeichnet, dass** mehrere Carbonylreste im Keton gemäß Formel (1) acetalisiert sind.

4. Verfahren nach einem der Ansprüche 1 bis 3, **dadurch gekennzeichnet, dass** das Keton ausgewählt ist aus der Gruppe umfassend: Dihydroxyaceton; Monohydroxyaceton; Acetylaceton.

5. Verfahren nach einem der Ansprüche 1 bis 4, **dadurch gekennzeichnet, dass** man vorzugsweise in einem Kessel mit mechanischem Rührer, Wasser, vorzugsweise Verdünnungswasser für das Ansetzen einer Bindemittelzusammensetzung, vorlegt;
die entsprechende Menge der Carbonylverbindung und entsprechendem Alkohol oder das Acetal und/oder geminale Diol zugibt und bis zur vollständigen Auflösung rührt, wobei man gegebenenfalls bei schlecht in Wasser löslichen Verbindungen vorsichtig erwärmt bzw. unter kräftigem Rühren ein Dispergierhilfsmittel zusetzt;
man zu dieser Lösung das Silan zugibt; und
man bis zur deutlichen Verfärbung der Lösung rührt.

## Revendications

1. Procédé de production d'un silane activé
**caractérisé en ce que**
un silane, choisi dans le groupe comprenant : les mono-, di- et trialcoxysilanes incluant un groupe alcoxy en C₁ à C₈, où l'alcoxysilane porte au moins un groupe aminoalkyle en C₂ à C₁₀ ou un groupe N-aminoalkyle en C₂ à C₁₀ ; le 3- (2-aminoéthylamino)propyl-triméthoxysilane ; (MeO)₃-Si-(CH₂)₃-NH-(CH₂)₃-Si-(OMe)₃ ; le 3-aminopropylsilanetriol ; un aminosilane avec un nonyl-phénolate éthoxylé ; phényl-CH₂-NH-(CH₂)₃-NH-(CH₂)₃-Si-(OMe)₃*HCl ; ainsi que leurs mélanges
est mis à réagir avec
un acétal ou semi-acétal à chaîne ouverte ou cyclique ou diol géminal d'une cétone selon la formule (1) : 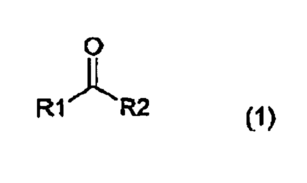
incluant au moins un groupe carbonyle qui forme un acétal ou semi-acétal avec un alkyl ou cycloalkyl alcool en C₁ à C₁₂, ou qui forme un diol géminal avec l'eau ;
dans laquelle R1 et R2, identiques ou différents, sont indépendamment choisis dans le groupe comprenant : H ; un groupe alkyle en C₁ à C₉ ; alcényle en C₂ à C₉ incluant 1 à 4 doubles liaisons, hydroxyalkyle en C₁ à C₉ ; aryle incluant 5 ou 6 atomes de C dans le cycle ou hétéroaryle incluant 1 à 4 hétéroatomes et 4 à 8 atomes de C dans le cycle, cycloalkyle incluant 5 à 10 atomes de C, hétérocycloalkyle incluant 1 à 4 hétéroatomes et 4 à 8 atomes de C dans le cycle, carbonyle, carboxyle, n-alkylcarbonyle en C₁ à C₉ ayant une position de la fonction carbonyle de 1 à 9, alcoxycarbonyle en C₁ à C₉, où le résidu alkyle en particulier est méthyle, éthyle, propyle ou butyle ;
et dans lequel l'acétal, semi-acétal ou diol géminal correspond à la formule générale (2) suivante : 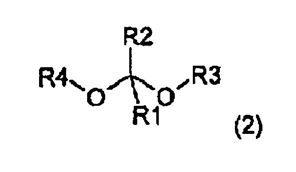
dans laquelle R3 et R4, identiques ou différents, sont indépendamment un groupe alkyle en C₁ à C₁₂ ou cycloalkyle en C₁ à C₁₂ ou H, et R1 et R2 ont la même signification que dans la formule (1)
ou
dans laquelle R3 est un résidu n-alkyle incluant 2 à 5 atomes de C, et R1 et R2 ont la même signification que dans la formule (1) ou R1 et R2 représentent H et R3 représente un groupe 2-oxypropyle, 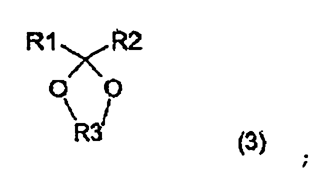 ou
le silane est mis à réagir avec des mélanges des acétals et diols géminaux cités.

2. Procédé selon la revendication 1, **caractérisé en ce que** le silane est le 3-aminopropyltriéthoxysilane.

3. Procédé selon la revendication 1 ou 2, **caractérisé en ce que** plusieurs groupes carbonyle dans la cétone selon la formule (1) sont acétalisés.

4. Procédé selon les revendications 1 à 3, **caractérisé en ce que** la cétone est choisie dans le groupe comprenant : la dihydroxyacétone ; la monohydroxyacétone ; l'acétylacétone.

5. Procédé selon les revendications 1 à 4, **caractérisé par** le chargement, de préférence dans un réservoir équipé d'un agitateur mécanique, d'eau, de préférence d'eau de dilution, pour commencer une composition de liant ;
l'ajout de la quantité correspondante du composé de carbonyle et l'alcool ou l'acétal et/ou le diol géminal correspondant, et l'agitation jusqu'à dissolution complète, où pour des composés faiblement solubles dans l'eau, un chauffage prudent est facultativement effectué, ou une aide à la dispersion est ajoutée avec une agitation vigoureuse ;
le silane est ajouté à cette solution ; et l'agitation est poursuivie jusqu'à un changement distinct de couleur de la solution.
